# EUROPÄISCHE PATENTSCHRIFT

(11) **EP 1 767 409 B1**
(45) Veröffentlichungstag und Bekanntmachung des Hinweises auf die Patenterteilung: **30.07.2008**
(21) Anmeldenummer: 06118319.0
(22) Anmeldetag: 02.08.2006
(51) Int. Cl.: B60R 21/017

(54) **Steuergerät zur Ansteuerung von Personenschutzmitteln**
Control device for controlling personal protection means
Dispositif de commande de moyens de protection de personnes

(30) Priorität: 21.09.2005 DE 102005045022
(43) Veröffentlichungstag der Anmeldung: 28.03.2007
(73) Patentinhaber: ROBERT BOSCH GMBH, 70442 Stuttgart (DE)
(72) Erfinder: Kuckling, Frank, 70499 Stuttgart (DE)

(56) Entgegenhaltungen:
- EP-B1- 0 883 527
- DE-A1- 10 344 841
- DE-A1- 19 843 074
- US-A1- 2001 006 309
- US-A1- 2004 045 760

## Beschreibung

### Stand der Technik

Die Erfindung betrifft ein Steuergerät zur Ansteuerung von Personenschutzmitteln nach der Gattung des unabhängigen Patentanspruchs.

Aus EP 883 527 B1 ist es bekannt, eine Highside und eine Lowside auf einem gemeinsamen Substrat vorzusehen und auf einem weiteren Substrat einen Hauptschalter vorzusehen, wobei ein Zündelement zur Auslösung einer Treibladung für einen Airbag nur bestromt wird, wenn alle drei Schalter geschlossen sind.

### Vorteile der Erfindung

Das erfindungsgemäße Steuergerät zur Ansteuerung von Personenschutzmitteln mit den Merkmalen des unabhängigen Patentanspruchs hat Vorteile. Es ist bekannt, dass wenigstens zwei High-Side-Schalter vorgesehen sind, die jeweils auf unterschiedlichen Substraten angeordnet sind. Dies hat den Zweck, dass bei einem Kurzschluss gegen Masse zwischen Zündelement und einem Low-Side-Schalter das Zündelement nicht durch einen einzelnen Fehler ausgelöst werden kann, da selbst bei einem Kurzschluss immer zumindest beide High-Side-Schalter gleichzeitig schließen müssen, damit das Zündelement mit dem Zündstrom bestromt wird. Damit wird eine erhöhte Sicherheit erreicht.

Erfindungskennzeichnend ist, dass die wenigstens zwei High-Side-Schalter parallel zueinander geschaltet sind. Damit ist es möglich, dass durch den jeweiligen High-Side-Schalter ein Teil des Zündstroms fließt, der zur Zündung des Zündelements notwendig ist. D. h. ist nur einer der Schalter geschlossen und der andere geöffnet, dann kann das Zündelement nicht gezündet werden. Es liegt also eine Aufteilung des Zündstroms auf die beiden High-Side-Schalter vor. Damit können die einzelnen High-Side-Schalter im Vergleich zu einem anderen High-Side-Schalter, der den gesamten Zündstrom aufnehmen muss, kleiner ausgelegt werden, da die einzelnen High-Side-Schalter erfindungsgemäß geringere Ströme liefern müssen. Es muss auch nicht so viel Wärme demnach abgeführt werden und kleinere Bauformen sind möglich.

Durch die in den abhängigen Ansprüchen aufgeführten Maßnahmen und Weiterbildungen sind vorteilhafte Verbesserungen des im unabhängigen Patentanspruch angegebenen Steuergeräts zur Ansteuerung von Personenschutzmittel möglich.

US 2004/0045760 A1 zeigt gemäß dem Oberbegriff des Anspruchs 1, dass drei Leistungsschalter, davon zwei High-Side-Schalter, in Serie mit dem Zündelement geschaltet sind. Nur wenn alle drei Leistungsschalter geschlossen sind, wird das Zündelement mit dem Zündstrom bestromt.

Vorteilhafter Weise wird die Zündschaltung mit einem Prozessor und/ oder einem Sicherheitshalbleiter verbunden, sodass durch Signale des Prozessors und/ oder des Sicherheitshalbleiters die Zündschaltung die wenigstens zwei High-Side-Schalter schließt. Hierfür sind alternativ verschiedene Permutationen der Signale des Prozessors und des Sicherheitshalbleiters möglich. Die Signale des Sicherheitshalbleiters und des Prozessors können miteinander verundet werden und das Ergebnissignal zur Ansteuerung der High-Side-Schalter und des Low-Side-Schalters verwendet werden. Es ist möglich, dass der Sicherheitshalbleiter lediglich den Low-Side-Schalter schließt und das Signal des Prozessors, meist ein Mikrocontroller, zum Schließen der High-Side-Schalter verwendet wird. Aber auch jede andere Logik ist hier möglich.

### Zeichnung

Ausführungsbeispiele der Erfindung sind in der Zeichnung dargestellt und werden in der nachfolgenden Beschreibung näher erläutert.

Es zeigen:
- Figur 1: ein erstes Blockschaltbild der erfindungsgemäßen Steuergeräts und
- Figur 2: ein zweites Blockschaltbild.

### Beschreibung

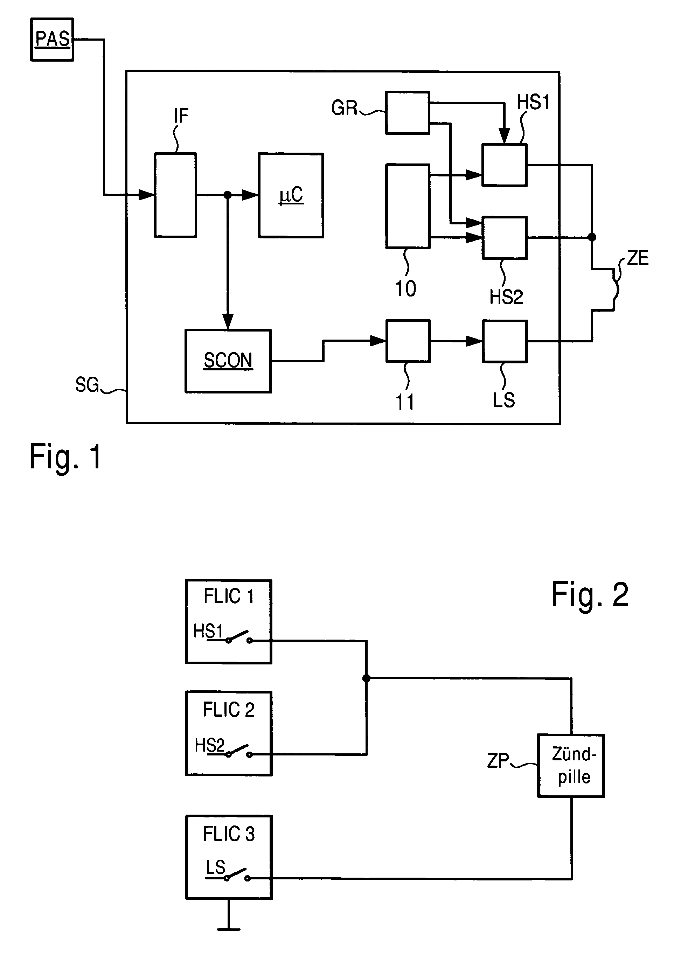

Figur 1 erläutert in einem ersten Blockschaltbild das erfindungsgemäße Steuergerät. Das Steuergerät SG weist einen Interface-Baustein IF auf, an den eine externe Sensorik PAS angeschlossen ist. Es handelt sich vorliegend um eine unidirektionale Datenübertragung von der externen Sensorik PAS zum Interface-Baustein IF. Es ist möglich, dass auch eine Busverbindung hier vorgesehen sein kann. Bei der externen Beschleunigungssensorik PAS handelt es sich beispielsweise um Beschleunigungssensoren, die im Bereich der Fahrzeugfront und/ oder als Seitenaufprallsensoren in der A-, B- oder C-Säule oder anderen Seitenteilen des Fahrzeugs angeordnet sind. Die Beschleunigungssensorik PAS kann auch mehrere Sensoren aufweisen. Es sind jedoch auch andere Sensoren, wie Drehratensensoren oder Drucksensoren oder Temperatursensoren oder auch andere Permutationen dieser Sensortypen möglich. Der Interface-Baustein IF liefert ein Signal, beispielsweise über einen internen Bus wie einem SPI (serial peripherial interface) an einem Mikrocontroller µC und einen Sicherheitshalbleiter SCON, die getrennt voneinander und unabhängig voneinander die Sensorsignale verarbeiten. Der Mikrocontroller verfügt über einen Auslösealgorithmus, der mit den Sensordaten gespeist wird. Ergibt die Auswertung des Auslösealgorithmus, dass das Zündelement zu zünden ist, dann überträgt der Mikrocontroller µC an eine Zündkreislogik 10 ein entsprechendes Auslösesignal. Der Sicherheitshalbleiter SCON weist eine in Hardware gegossene Auswertung auf, beispielsweise mit festen Schwellwerten, sodass der Sicherheitshalbleiter SCON bei erheblich niedrigeren Sensorwerten auf eine Auslösung entscheidet. Dieses Signal überträgt der Sicherheitshalbleiter SCON dann an die Logik 11, die mit einem Steuereingang des Schalters LS, also der Lowside, verbunden ist. Der Sicherheitshalbleiter SCON kann auch noch weitere Funktionen aufweisen, wie eine Watchdog-Funktion. Außerdem ist es möglich, dass das Signal des Sicherheitshalbleiters SCON zeitverzögert zur Lowside LS übertragen wird. Die Zündlogik 10 als Teil der Zündschaltung steuert sie Steuereingänge der High-Side-Schalter HS1 und HS2 an, sodass diese durchschalten können und den Zündstrom aus der Energiereserve ER, meist einem Elektrolytkondensator, zum Zündelement ZE freigeben können. Ist dann auch die Lowside durchgeschaltet, da der SCON ebenfalls auf Auslösung entschieden hat, dann kann der Zündstrom fließen und das Zündelement zum Zünden bringen. Das Zündelement ist nicht im Steuergerät vorgesehen, sondern außerhalb, um den jeweiligen Airbag mittels der Zündung zum Aufblähen zu bringen. Daher sind sie High-Side-Schalter HS1 und HS2 sowie der Low-Side-Schalter LS über Schnittstellen mit dem Zündelement ZE verbunden. Diese Schnittstellen können einfache Leitungen sein, die über Stecker im Steuergerät angeschlossen werden, es kann sich jedoch auch um ein Bus-Interface handeln.

Durch die Verwendung von unterschiedlichen Substraten für die einzelnen Schalter HS1, HS2 und LS, die allesamt als MOSFET-Schalter ausgebildet sein können, ist eine hohe Sicherheit für die Ansteuerung des Zündelements ZE gegeben. Vorliegend wird der Zündstrom aus einer Energiereserve ER gewonnen, die über die Batteriespannung aufgeladen wurde, beispielsweise bis auf 40 Volt, wenn es sich um einen Elektrolytkondensator handelt. Es ist möglich, beispielsweise bei Gurtstrafferanwendungen, dass der Zündstrom aus dem Bordnetz gewonnen wird, also aus der Batteriespannung. Durch die Spezifikation der High-Side-Schalter HS1 und HS2 sowie des Low-Side-Schalters LS wird der Strom bestimmt, der durch diese Schalter fließen kann. Neben den hier dargestellten Elementen, sind in Steuergerät SG noch weitere Elemente vorhanden, wie beispielsweise auch eine interne Beschleunigungssensorik. Der Einfachheit halber ist hier lediglich die Ansteuerung eines Zündelements dargestellt, es ist jedoch möglich, dass verschiedene Zündelemente und auch üblich von einem Steuergerät SG angesteuert werden. Als vorteilhafte Maßnahme hat es sich erwiesen, bei einer solchen mehrfachen Ansteuerung von Zündkreisen, eine so genannte Kreuzkopplung vorzusehen. D. h. auf einem Substrat sind mehrere Paare von Highside- und Low-Side-Schaltern angefertigt, die aber alle mit anderen Highside- bzw. Low-Side-Schaltern gepaart werden, um die erfindungsgemäße Anordnung zu realisieren. Insbesondere sind dabei drei verschiedene Substrate möglich, die eine entsprechende Kreuzkopplung ermöglichen. Durch diese Kreuzkopplung wird ein hohes Maß an Sicherheit gewonnen, sodass eine Fehlauslösung in ihrer Wahrscheinlichkeit weiter reduziert werden kann.

Figur 2 zeigt in einem weiteren Blockschaltbild die erfindungsgemäße Konfiguration. Auf einem ersten Substrat FLIC1 ist ein erster High-Side-Schalter HS1 angeordnet. Parallel zu diesem ersten High-Side-Schalter HS1 ist ein zweiter High-Side-Schalter HS2 auf einem zweiten Substrat FLIC2 angeordnet. Durch die Parallelverschaltung werden die Ströme, die durch die Schalter HS 1 und HS2 führen, addiert. Dieser addierte Strom kann dann durch eine Zündpille ZP fließen, um diese zur Auslösung anzuregen. Da der Strom nach Masse abfließen muss, ist ein weiterer Schalter, nämlich der Low-Side-Schalter LS, auf einem dritten Substart FLIC3 vorgesehen. Dieser ist dann mit Masse verbunden. Nur wenn alle drei Schalter geschlossen sind, kommt es zur Bestromung der Zündpille ZP.

Beim Substrat handelt es sich um eine Halbleiterscheibe, auf die entsprechende Transistoren als Schalter gefertigt wurden.

## Patentansprüche

1. Steuergerät zur Ansteuerung von Personenschutzmitteln mit:
- Einer Zündschaltung (10) mit wenigstens zwei High-Side-Schaltern (HS1, HS2) auf jeweils einem ersten und einem zweiten Substrat und wenigstens einem Low-Side-Schalter (LS) auf einem dritten Substrat (FLIC3)
- Einer Schnittstelle zu einem Zündelement (ZE, ZP), das durch die Zündschaltung (10) zur Zündung bestromt wird
- Wenigstens einer Energiequelle (ER), die mit den wenigstens zwei High-Side-Schaltern (HS1, HS2) und der Schnittstelle derart verbunden ist, dass das Zündelement (ZE, ZP) durch einen Zündstrom aus der wenigstens einen Energiereserve (ER) gezündet wird, wenn die wenigstens zwei High-Side-Schalter (HS1, HS2) geschlossen sind, **dadurch gekennzeichnet, dass** die wenigstens zwei High-Side-Schalter (HS1, HS2) parallel zueinander geschaltet sind,
wobei durch den jeweiligen High-Side-Schalter (HS1, HS2) jeweils ein Teil des Zündstroms fließt.

2. Steuergerät nach Anspruch 1, **dadurch gekennzeichnet, dass** die Zündschaltung mit einem Prozessor (µC) und/oder einem Sicherheitshalbleiter (SCON) derart verbunden ist, dass durch ein Signal des Prozessors (µC) oder des Sicherheitshalbleiters (SCON) die Zündschaltung (10) die wenigstens zwei High-Side-Schalter (HS1, HS2) schließt.

## Claims

1. Control device for controlling personal protection means comprising:
- a firing circuit (10) having at least two high-side switches (HS1, HS2) respectively on a first and a second substrate, and at least one low-side switch (LS) on a third substrate (FLIC3)
- an interface with a firing element (ZE, ZP) which is energized to fire by the firing circuit (10),
- at least one energy source (ER) which is connected to the at least two high-side switches (HS1, HS2) and the interface in such a way that the firing element (ZE, ZP) is fired by a firing current from the at least one energy reserve (ER) if the at least two high-side switches (HS1, HS2) are closed, **characterized in that** the at least two high-side switches (HS1, HS2) are connected in parallel with one another, wherein in each case part of the firing current flows through the respective high-side switch (HS1, HS2).

2. Control device according to Claim 1, **characterized in that** the firing circuit is connected to a processor (µC) and/or a safety semiconductor (SCON) in such a way that the firing circuit (10) closes the at least two high-side switches (HS1, HS2) by means of a signal from the processor (µC) or from the safety semiconductor (SCON) .

## Revendications

1. Appareil de commande pour commander des moyens de protection de personnes comprenant :
- un circuit de déclenchement (10) ayant au moins deux commutateurs côté haut (HS 1, HS2) respectivement sur un premier et un second substrat et au moins un commutateur côté bas (LS) sur un troisième substrat (FLIC3),
- une interface pour un élément de déclenchement (ZE, ZP) qui alimente le circuit d'allumage (10) pour l'allumer,
- au moins une source d'énergie (ER) reliée à au moins deux commutateurs côté haut (HS1, HS2) et à l'interface de façon à déclencher l'élément d'allumage (ZE, ZP) par un courant d'allumage fourni par au moins une réserve d'énergie (ER) si au moins deux interrupteurs côté haut (HS1, HS2) sont fermés,
**caractérisé en ce qu'**
au moins les deux commutateurs côté haut (HS1, HS2) sont branchés en parallèle,
et chaque commutateur côté haut (HS1, HS2) est traversé par une partie du courant d'allumage.

2. Appareil de commande selon la revendication 1,
**caractérisé en ce que**
le circuit d'allumage est relié à un processeur (µC) et/ou à un semi-conducteur de sécurité (SCON) de façon que par un signal du processeur (µC) ou du semi-conducteur de sécurité (SCON), le circuit d'allumage (10) ferme au moins les deux commutateurs côté haut (HS1, HS2).
